# EUROPEAN PATENT APPLICATION

(11) **EP 1 657 906 A2**
(43) Date of publication of application: **17.05.2006**
(21) Application number: 05110354.7
(22) Date of filing: 04.11.2005
(51) Int. Cl.: H04N 1/32

(54) **Printing method and apparatus**

(30) Priority: 15.11.2004 KR 2004093090
(71) Applicant: Samsung Electronics Co., Ltd., Suwon-si, Gyeonggi-Do (KR)
(72) Inventor: Oh, Myoung-jin, Suwon-si Gyeonggi-do (KR); Kang, Jae-kyoo, Giheung-eup Yongin-si Gyeonggi-do (KR)
(74) Representative: Derry, Paul Stefan

(57) **Abstract**

A printing method and apparatus is provided which can allocate an identification code and additional information to respective files to enable separate processing of the files according to the designated additional information. Accordingly, specific files can be facilely selected from among a mass of files, and further, the selected files can be separately processed according to the additional information.

## Description

The present invention relates to printing.

As digital cameras have become more widespread, images are now more easily photographed, obtained, and stored on a personal computer (PC). A user can easily print these images out or send electronic mail (e-mail) with the images attached. Accordingly, software for image management has been developed to enable, for example, the printing and attachment of the images to e-mail through the PC.

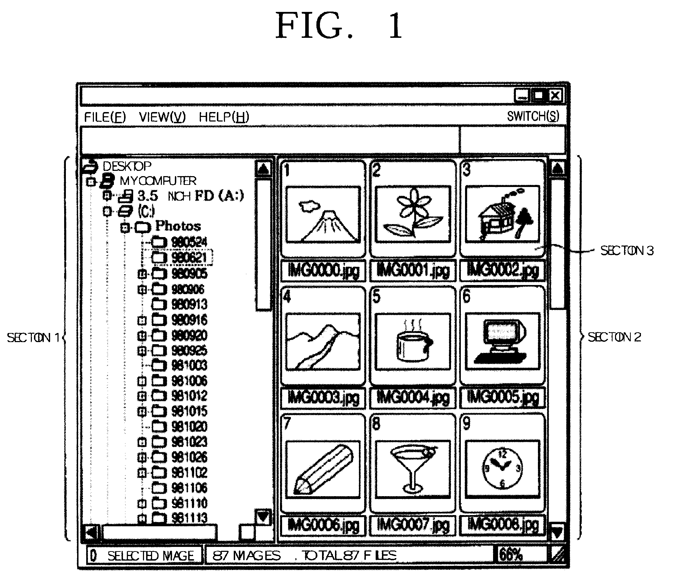

Figure 1 illustrates an exemplary screen for image management. As shown in Figure 1, upon selecting a folder from section 1 including an image to be displayed, image files in the corresponding folder are displayed in the form of thumbnail, so that the user can preview a number of images at once. When a certain thumbnail from section 2 is selected and double-clicked, the corresponding image can be printed out, as well as displayed in a larger form through a separate window. Also, when a certain thumbnail is selected and designated for e-mail transmission, e-mailing software is cause automatically to attach an image file corresponding to the selected thumbnail to an e-mail.

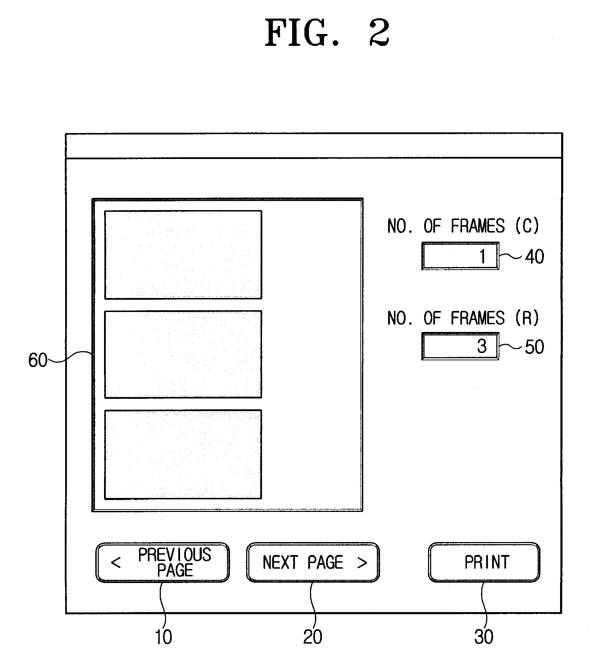

Figure 2 illustrates an example of a print designation window.

By selecting a plurality of thumbnails and selecting a "print" option, a window illustrating a print sheet is displayed as shown in Figure 2. Here, thumbnail data 60 is disposed on the left of the sheet, and the number of frames in a row 40 and the number of frames in a column 50 of the thumbnail image frames for display on the sheet may respectively be designated by a user. In the example shown in Figure 2, the number of rows and the number of columns of the frames 40 and 50 are set to 1 and 3, respectively. In a case wherein the selected images are to be displayed by more than one sheet, a "previous page" button 10 and a "next page" button 20 are used to view all of the image frames. If a "print" button 30 is selected, printing is performed according to a layout as designated above.

Through such a thumbnail method of display, many images can be seen at once; however, the images are displayed in a size that is too small to be viewed in detail.

Image management software sometimes includes a "slide show" function for consecutively displaying the plurality of selected thumbnail data in a full screen. Using the slide show function, a first image among the selected images is displayed in a full screen and changed to a next image upon a mouse-click or a key operation. By repeating this, all of the selected images can be displayed in full- or near full-screen in series.

After being photographed using a digital camera and saved in the PC, the plurality of images are typically displayed in sizes of 80×60 pixels to 162×120 pixels, in consideration of a screen size of a conventional PC device. However, the user is required to check the images by repeatedly playing the "slide show" to select preferred images for printing or e-mailing, and then remember the required images before reselecting them after returning to the screen which displays the thumbnail data. Therefore, it can take a great deal of time and effort to select desired images for printing and e-mailing. In addition, yet another procedure is required to determine printing options such as the number of copies for printing, zoom-in and zoom-out, or to determine additional information for e-mailing, such as a destination address and a sending time, thereby causing inconvenience to the user.

The invention aims to ameliorate the above shortcomings of the prior art.

Accordingly, an aspect of the present invention provides a printing method for facilely managing a document by printing an image in a thumbnail form and then adding information to a printed paper, and a printing apparatus according to the same.

According to an aspect of the present invention, a printing method is provided comprising the steps of printing out printing information including an additional information indication part for designating certain additional information and a discernable identification code, displaying the additional information in the additional information indication part, reading the additional information and the identification code, and printing out the printing information being discriminated by the identification code according to the additional information. The discernable identification code may be comprised of a barcode. The displaying step further comprises a step for selecting one of a plurality of configurable options. More preferably, the plurality of options may comprise a number of copies for printing of the printing information. The reading step further comprises a step of at least one of scanning the additional information or scanning the barcode identification.

Another aspect of the present invention provides a printing apparatus comprising a printing part for printing out the printing information including the additional information indication part for designating certain additional information and a discernable identification code, a reading part for reading the additional information and the identification code, and a control part for printing out the printing information being discriminated by the identification code according to the additional information. The discernable identification code may be comprised of a barcode. The additional information indication part can further select and display one of a plurality of configurable options. The plurality of options may comprise a number of copies for printing of the printing information. The reading part can further perform at least one of a scanning of the additional information or a scanning of the barcode identification.

Embodiments of the invention will now be described with reference to the accompanying drawings, wherein;
Figure 1 shows an exemplary window screen for image management;
Figure 2 shows an example of a window screen for setting print options;
Figure 3 is a schematic block diagram of a multi-function apparatus according to the invention;
Figure 4 shows an example of thumbnail data allocated and displayed with an identification code and additional information, respectively, according the invention;
Figure 5 shows another example of thumbnail data allocated and displayed with an identification code and additional information, respectively, according to the invention;
Figures 6A to 6C show tables for managing printing data according to the invention; and
Figure 7 is a flowchart for illustrating a method of reading and printing printed thumbnail data according to the invention.

Throughout the drawings, like reference numerals refer to like parts, components and structures.

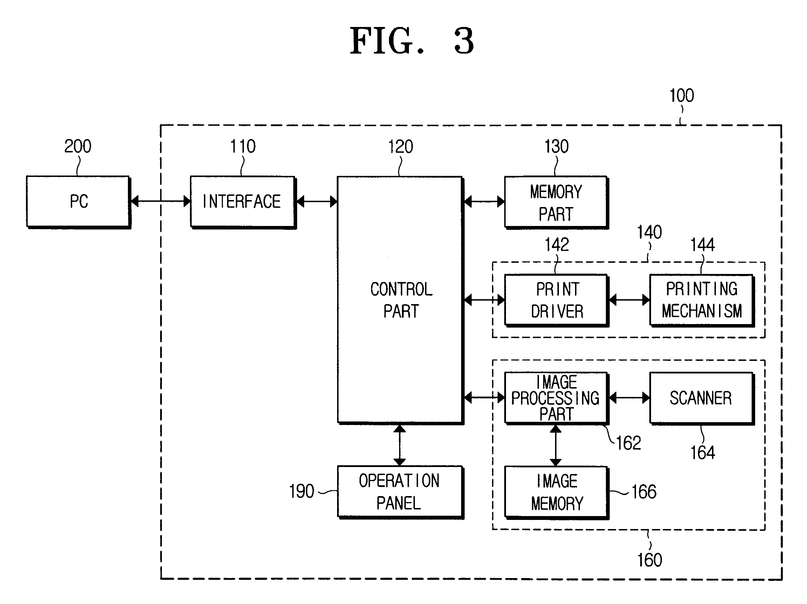

As shown in Figure 3, a multi-function apparatus 100 comprises an interface 110, a control part 120, a memory part 130, a printing part 140 including a print driver 142 and a printing mechanism 144, and a reading part 160 including an image processing part 162, a scanner 164, and an image memory 166.

A structure of the printing part 140 will now be described in detail.

An operation panel 190 comprises an input part having a plurality of keys (not shown) for selecting and setting functions applied by the multi-function apparatus 100, and a display part (not shown) for displaying information on an operation status of the multi-function apparatus 100.

The interface 110 is connected between a host computer 200 and the control part 120 so as to interface input/output signals. The interface 110 may adopt an Institute of Electrical and Electronics Engineers (IEEE) 1284 interface, a universal serial bus (USB), an RS232C interface, or the like.

The memory part 130 comprises a ROM for storing control programs and application programs to drive the control part 120, and a RAM for buffering printing data applied from the host computer 200 through the interface 110 and a variety of data generated during the execution of the programs of the control part 120. The memory part 130 further includes a program for generating a discernable identification code, such as a barcode, and an additional information displaying program for showing additional information so that a user is able to designate printing options, such as the number of copies for printing.

The host computer 200 converts files for printing, such as image files, into thumbnail data and transmits the thumbnail data to the multi-function apparatus 100.

The control part 120 controls the operation of the printing mechanism 144 according to the control programs in the memory part 130, and controls the printing part 140 to display the identification code and the additional information. More specifically, when the thumbnail data for printing is received from the host computer 200 through the interface 110, programs for generating the identification code and for displaying the additional information, which are stored to the memory part 130, are executed to form printing data and generate frame data by adding the identification code and the additional information to the respective thumbnail data. Additionally, color compensation is performed with respect to the data based on a YMCK (yellow-magenta-cyan-black) color system, and the color-compensated data is stored to the memory part 130. The stored data is then converted, according to the colors, to the image data in a bitmap form. When the generation of the bitmap data is completed, a command is transmitted to the printing part 140 to begin printing the work.

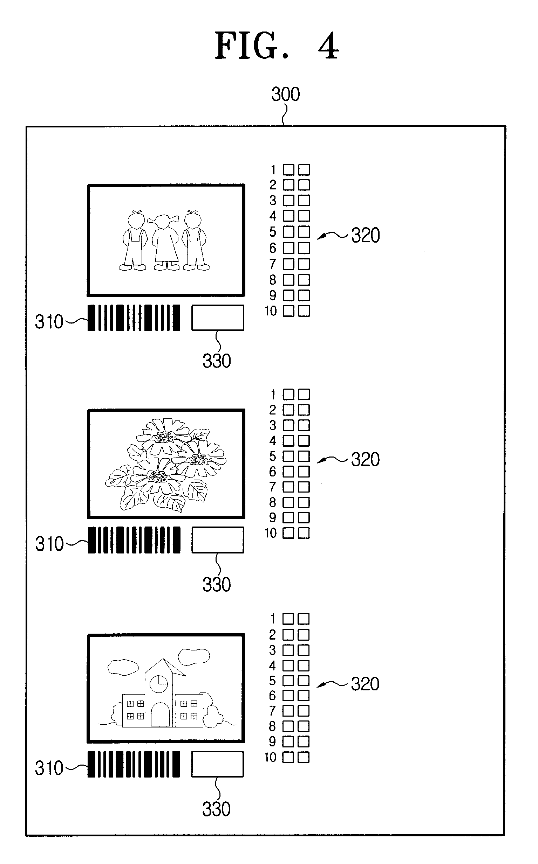

Hereinbelow, a method for displaying the identification code and the additional information will be described in greater detail with reference to Figure 4. Figure 4 shows an example of thumbnail data allocated and displayed with an identification code and additional information, respectively. As the thumbnail data is transmitted from the host computer 200, the control part 120 executes the programs stored in the memory part 130, that is, the programs for generating the identification code and displaying the additional information, such that an identification code 310 in a barcode form is discernibly displayed below the thumbnail data, respectively. The additional information indication part 320 is displayed on the right of the thumbnail data, respectively, to display thereon various conditions configured by a user, such as the number of copies for printing. Also, a file name 330 can be additionally displayed at a certain position below the thumbnail data.

The identification code 310 may be other than the barcode form shown in Figure 4, and can instead be comprised of serial numbers allocated to the respective image data to discriminate among one another. Alternatively, locations of each image data may be initially selected so that the image data can be later identified by the location information. For example, each image data may be allocated with a certain (x, y) coordinate, and location information based on the coordinate is kept in a memory. The location of each image data can be identified by reading the (x, y) coordinate displayed on the additional information indication part 320. In a case wherein the identification code 310 has a barcode form, a dedicated barcode reader can be adopted to read the barcode and thereby identify location information of each image data. The additional information indication part 320 can display diverse information related to general printing options comprising zoom-in/zoom-out, paper type and paper orientation, number of copies for printing, and so forth. The additional information indication part 320 preferably comprises indication blanks for a user to mark for the selection of the printing options.

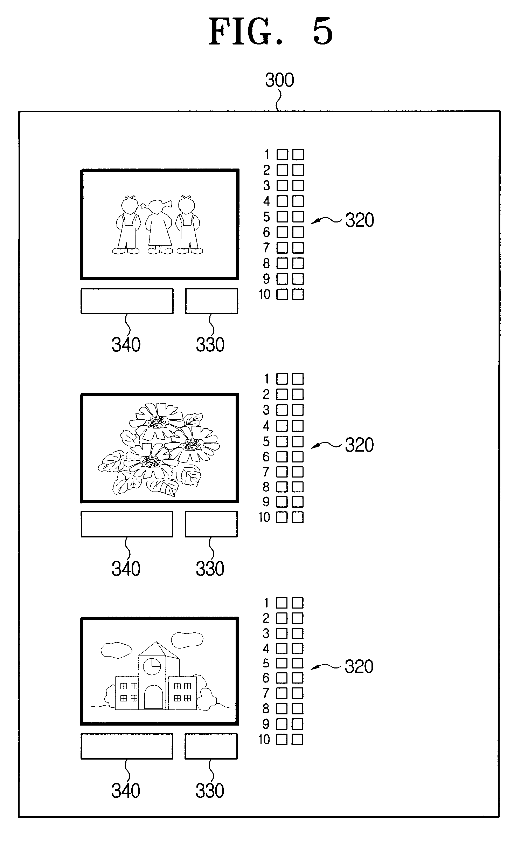

Figure 5 shows another example of thumbnail data allocated and displayed with an identification code and additional information, respectively. As shown in Figure 5, location information 340 and the additional information 320 is displayed and printed out below and beside the respective image data respectively. The location information 340 may comprise a file path (such as a folder name) which indicates the location of the corresponding file image. As described above regarding the embodiment shown in Figure 4, the identification code 310 can be comprised of any of the barcode, the file name, and the file location information. Alternatively, the barcode, the file name, and the file location information can all be included in the identification code 310.

Referring again to Figure 3, the print driver 142 and the printing mechanism 144 operate as the printing part 140. The print driver 142 controls the driving of the printing mechanism 144 under control of the control part 120. The print driver 142 decodes the printing data received from the control part 120 through an internal bus, and generates patterns with respect to images which are to be generated by the printing mechanism 144. The print driver 142 controls the driving of the printing mechanism 144 based on this printing data.

The printing mechanism 144 picks up paper stacked on a paper supply cassette (not shown) sheet by sheet according to a paper feeding signal of the print driver 142, forms an electrostatic latent image on a photoconductive drum (not shown) by scanning a laser beam on the photoconductive drum, supplies a developer to the photoconductive drum having thereon the electrostatic latent image thereby forming a toner image, transfers the toner image onto the supplied paper, and fuses the toner image on the paper by applying heat and pressure. Thus, a desired image is produced.

The host computer 200 transmits the image data for printing as the thumbnail data to the multi-function apparatus 100 by a user's operation, and the control part 120 adds the identification code 310 and the additional information indication part 320 to the thumbnail data, thereby converting the thumbnail data to the bitmap image data which comprises the printing data, while the print driver 142 controls the driving of the printing mechanism 144 to print out the printing data according to the control of the control part 120.

The reading part 160 comprises a scanner 164, an image processing part 162, and an image memory 166. The scanner 164 scans the image in substantially the same manner as a general scanner, scans the printed image data, and reads and outputs the image data with the identification code 310, the additional information indication part 320, and the file name 330 added thereto. The image processing part 162 compensates the image quality of the image data scanned by the scanner 164, reads the identification code 310, the additional information of the additional information indication part 320, and the file name 330 from the scanned data, and transmits the information to the control part 120. The image memory 166 stores the respectively processed image data and the identification codes 310 corresponding to the respective image data. The image data stored to the image memory 166 is controlled by the control part 120 so as to print out the image data according to a result of the read additional information, such as the number of copies for printing. If the image data is not allocated with the identification code 310 or the file name 330, the image processing part 162 reads the location information and the additional information of the respective image data and transmits the read information to the control part 120. The image memory 166 then stores the respectively processed image data and the location information corresponding to the respective image data.

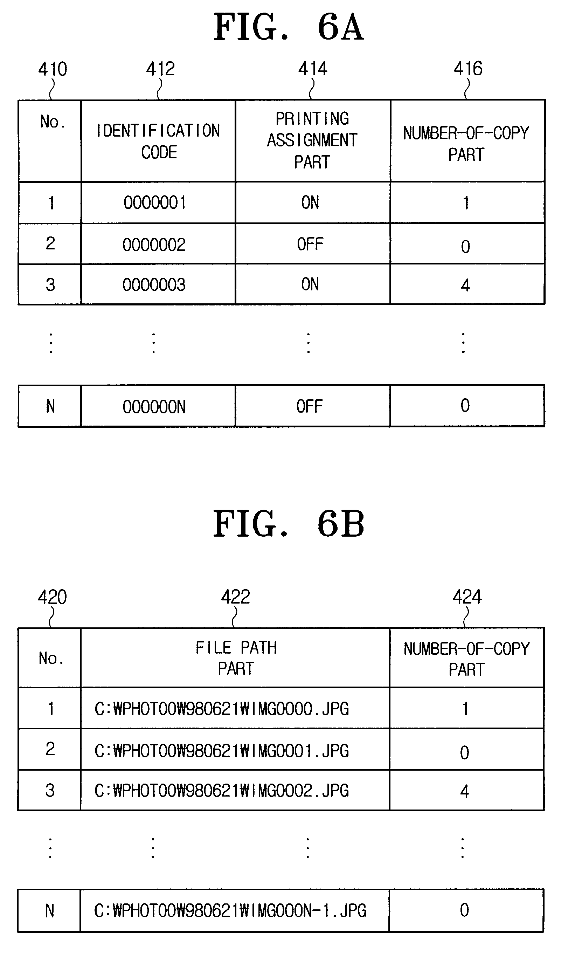

The control part 120 manages the identification codes 310 and the additional information transmitted from the image processing part 162 using a table as shown in Figure 6A. In the table of Figure 6A, the printed thumbnail data is given numbers 410. Each numbered item of the table may include an identification code part 412 representing the identification code 310, a printing assignment part 414 representing whether the thumbnail image is to be printed or not according to the read result of the additional information indication part 320, and a number-of-copy part 416 representing the number of copies for printing. The printing assignment part 414 and the number-of-copy part 416 may both be recorded in the table according to the read information of the additional information; however, it is preferable that the number-of-copy part 416 be tabulated for each numbered item so that printing is performed with respect to only the thumbnail data recorded with a number of copies for printing.

That is, the control part 120 checks the printing assignment state and the number of copies of the respective thumbnail data, and controls the multi-function apparatus 100 so as to print out the images in order of the number 410 stored in the table.

When the file path is used as the location information as shown in Figure 6B, the thumbnail data is given numbers 420, and each numbered item includes a file path part 422 representing the file path and a number-of-copy part 424.

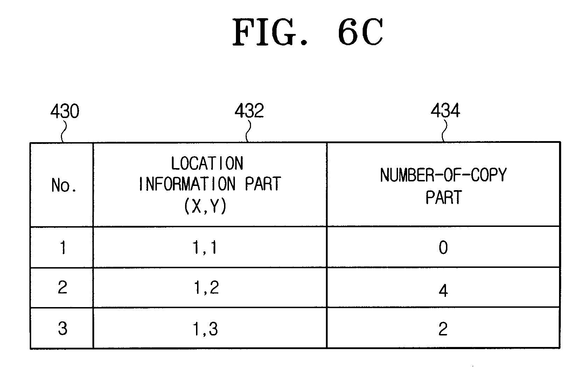

When the control part 120 stores only the initially selected location information as shown in Figure 6C, the respective thumbnail data is given numbers 430, and a location information part 432 and a number-of-copy part 434 may be tabulated for each numbered item. For example, the thumbnail data shown in Figure 4 can have the location information recorded in the location information part 432, wherein the coordinate (x, y) is (1, 3).

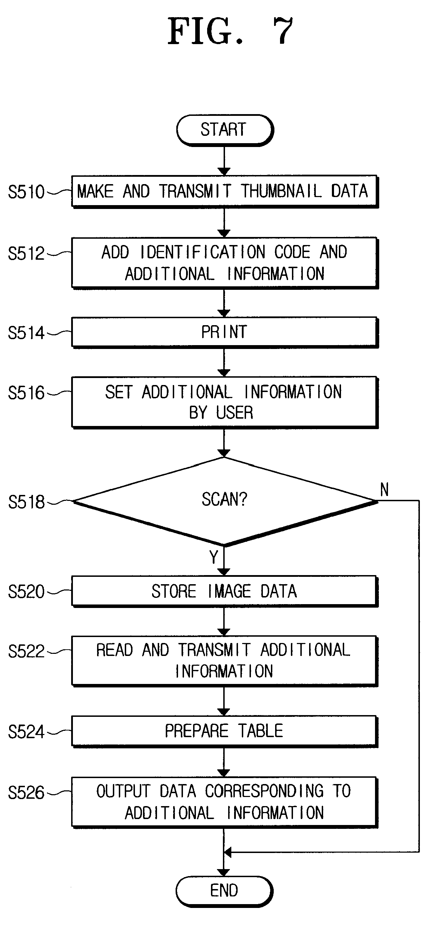

Hereinbelow, a printing method according to the invention will be described in greater detail with respect to Figure 7.

In the method of Figure 7, the host computer 200 first prepares and transmits the thumbnail data for printing to the multi-function apparatus 100 at step (S510). The thumbnail data is transmitted through the interface 110 to the control part 120 of the multi-function apparatus 100 which executes programs for generating the identification code 310 and for displaying the additional information, which are stored to the memory part 130, and records the identification code 310 below the respective image data. The control part 120 also displays the additional information indication part 320 for the user to set the additional information, such as the number of copies for printing by marking therein, and creates the bitmap image data at step (S512). In addition, the control part 120 drives the print driver 142 to control the print mechanism 144 to then print out the image data at step (S514).

In the case wherein the initially selected location information is used in step (S512), the image data may be provided with the additional information indication part 320 displayed on the right thereof by only operating the additional information displaying programs.

When the additional information indication part 320 is set by the user with respect to the printed image data at step (S516), the control part 120 controls the scanner 164 to scan the image data including the identification code 310 and the additional information indication part 320 at step (S518). The image processing part 162 reads the identification code 310 and the additional information from the scanned data, stores the image data according to the identification code 310 to the image memory 166 at step (S520), and transmits the read identification codes 310 and additional information 320 to the control part 120 at step (S522).

The control part 120 prepares a table (such as the table of Figure 6A) for managing the image data, referring to the additional information corresponding to each identification code 310 at step (S524). When the table is completed, the control part 120 controls the printing part 140 so as to read the corresponding files from the image memory 166 according to the additional information and print out the read files at step (S526).

As can be appreciated from the above description, the files for printing, including the image files, are allocated with the identification code 310 and the additional information indication part 320 and then printed out. Then, the information set or marked in the additional information indication part 320 by the user is read by scanning, and the respective files are processed according to the result of the reading.

In the above embodiments, the scanned image is stored to the image memory 166 and output according to the identification code 310 and the additional information in the additional information indication part 320. Alternatively, the control part 120 may store the identification code 310 and the corresponding image to the memory 130 when allocating the identification code 310 and the additional information to the respective image data, and the scanner 164 may read the identification code 310 and the additional information indication part 320 so that the images stored to the memory 130 are printed according to the read additional information. That is, the images can be stored to either the memory part 130 or the image memory 166.

In the above, the host computer 200 initially sends thumbnail image data to the multi-function apparatus 100, and the final printing step utilises the thumbnail image data to print images. Alternatively, the host computer 200 may initially send thumbnail image data to the multi-function apparatus 100, and the final printing step utilises the non-thumbnail image data obtained from the host computer 200 to print images. Further alternatively, the host computer 200 may initially send non-thumbnail image data to the multi-function apparatus 100, which converts the images into thumbnail images for the first printing stage and uses the non-thumbnail image data to print images at the final printing stage.

The exemplary structures of the multi-function apparatus have been described as examples only, and the present invention can be adapted to any number of devices having a scanning function.

For example, in a case wherein a fax function and a mail function are additionally provided to the multi-function apparatus, the additional information indication part 320 may further comprise blanks for setting a faxing time, a reservation time for faxing, and other options for sending mails.

Using the above, the selection of specific files from among a mass of files stored to the host computer 200 such as the PC, and a digital camera, is facilitated, and the selected files can be separately processed according to the dedicated information thereof. Especially in the case wherein a plurality of the files are to be separately printed by more than one user, the selection of the images becomes easy through the printed thumbnail data.

While the invention has been shown and described with reference to certain embodiments thereof, various changes in form and detail may be made therein without departing from the scope of the invention as defined by the appended claims.

## Claims

1. A method comprising:
printing on a page one or more items each comprising an image, a discernable identification code and an additional information indication part;
electronically scanning the printed page following annotation thereof by a user;
processing the scanned page to determine for at least one of the items annotations to the additional information indication part and the discernable identification code; and
on the basis of the annotations for an item, printing the corresponding image as identified by the discernable identification code identified for that item.

2. A printing method comprising the steps of:
printing out an image and image printing information including an additional information indication part for designating certain additional information and a discernable identification code;
displaying the image and the additional information in the additional information indication part;
reading the additional information and the discernable identification code; and
printing out the image being discriminated by the discernable identification code according to the additional information.

3. The method of claim 1 or claim 2, wherein the discernable identification code comprises an image file name and/or a file path.

4. The method of claim 1 or claim 2, wherein the discernable identification code comprises an image location information initially selected.

5. The method of claim 1 or claim 2, wherein the discernable identification code comprises a barcode.

6. The method of claim 2, wherein the displaying step comprises a step of selecting one of a plurality of user configurable options.

7. The method of claim 6, wherein the plurality of user configurable options comprises a number of copies for printing of the image.

8. The method of claim 1 or any claim dependent thereon, wherein the second printing step comprises printing a number of copies of the image in dependence on the detected annotations.

9. Printing and scanning apparatus comprising:
means for printing on a page one or more items each comprising an image, a discernable identification code and an additional information indication part;
means for scanning the printed page following annotation thereof by a user;
means for processing the scanned page to determine for at least one of the items annotations to the additional information indication part and the discernable identification code; and
means for printing the corresponding image as identified by the discernable identification code identified for that item on the basis of the annotations determined for that item.

10. A printing apparatus comprising:
a printing part for printing out an image and image printing information including an additional information indication part for designating additional information and a discernable identification code;
a reading part for reading the additional information and the discernable identification code; and
a control part for printing out the image being discriminated by the discernable identification code according to the additional information.
